# EUROPÄISCHE PATENTSCHRIFT

(11) **EP 4 541 184 B1**
(45) Veröffentlichungstag und Bekanntmachung des Hinweises auf die Patenterteilung: **28.10.2026**
(21) Anmeldenummer: 24213274.4
(22) Anmeldetag: 25.05.2020
(51) Int. Cl.: A01M 7/00, A01B 79/00, B05B 12/00, G01F 1/115, B05B 7/24, B05B 7/32

(54) **ÜBERWACHUNGSMODUL FÜR SPRÜHGERÄTE**
MONITORING MODULE FOR SPRAYERS
MODULE DE SURVEILLANCE POUR PULVÉRISATEURS

(30) Priorität: 31.05.2019 EP 19177562; 17.12.2019 EP 19217003
(43) Veröffentlichungstag der Anmeldung: 23.04.2025
(62) Dokumentnummer(n) der früheren Anmeldung(en) nach Art. 76 EPÜ: 20727299.8 / 3 975 713
(73) Patentinhaber: Discovery Purchaser Corporation, Wilmington, County of New Castle, DE 19801 (US)
(72) Erfinder: Gutsmann, Volker, 40764 Langenfeld (DE); Mayer, Walter, 42113 Wuppertal (DE)
(74) Vertreter: Vossius & Partner Patentanwälte Rechtsanwälte mbB

(56) Entgegenhaltungen:
- EP-A1- 3 348 329
- DE-A1- 102005 013 662
- DE-A1- 102013 109 785
- JP-A- H07 256 159
- US-A1- 2018 274 212
- ENDRESS + HAUSER: "Picomag Il misuratore plug-and-play semplice e intelligente per le utility", 28 February 2017 (2017-02-28), pages 1 - 4, XP093166663, Retrieved from the Internet <URL:https://portal.endress.com/dla/5001108/4573/000/00/IN01088DIT_0217.pdf>
- SONOTEC: "SONOFLOW IL.52 V2.0", 26 October 2018 (2018-10-26), pages 1 - 6, XP093166703, Retrieved from the Internet <URL:https://gmptec.de/wp-content/uploads/datenblaetter/td_sonoflow_il.52_v2.0_engl_sonotec.pdf>
- "Technische Durchflussmessung unter besonderer Berücksichtigung neuartiger Durchflussmessverfahren", 1 January 2002, VULKAN VERLAG GMBH, Essen, ISBN: 978-3-8027-2190-8, article KARL WALTER BONFIG: "Technische Durchflussmessung unter besonderer Berücksichtigung neuartiger Durchflussmessverfahren", pages: 24 - 27, XP093167738

## Beschreibung

Die vorliegende Erfindung befasst sich mit der Applikation von Pflanzenschutzmitteln, Düngemitteln und/oder Pestiziden mit Hilfe eines (vorzugsweise tragbaren) Sprühgerätes oder eines Kleingerätes (wie beispielsweise einer Fahrradspritze). Ein Gegenstand der vorliegenden Erfindung ist ein Überwachungsmodul, mit dem bestehende Sprühgeräte ausgerüstet werden können, um den Sprühvorgang zu kontrollieren, zu verfolgen und/oder zu dokumentieren.

Sprühgeräte sind im Stand der Technik ausgiebig beschrieben. In der Landwirtschaft werden Sprühgeräte eingesetzt, um Pflanzenschutzmittel oder Düngemittel zu applizieren (siehe z.B. WO2018/108696A1, DE102013109785A1, EP0143588A2, EP0256744A1). Ebenso werden Sprühgeräte in der Forstwirtschaft (sie z.B. US20050121462A1) oder der Schädlingsbekämpfung eingesetzt (siehe z.B. WO2018011009A1, WO2018011010A1, WO2018011011A1, WO2018011012A1, US2005/0006400A1, US2006/0102245A1, US20060249223A1, US2006/0261181A1, WO2013/165684A2, WO2015/087805A1, US4790454). Auch Überwachungsmodule mit einem Durchflussmesser sind bekannt (siehe z.B. US2018/274212A1).

Oftmals werden vergleichsweise einfache Geräte verwendet, die über einen tragbaren Behälter zur Aufnahme des Sprühmittels und einen Düsenhalter mit mindestens einer Düse, über die das Sprühmittel verteilt werden kann, verfügen. Je nach Einsatzzweck kann auch eine handgeführte Sprüheinrichtung über einen kleinen Balken mit mehreren Düsen bestückt sein. Mittels einer hand- oder motorbetriebenen Pumpe wird das Sprühmittel aus dem Behälter durch Spritzmittelleitungen zum Düsenhalter und durch die mindestens eine Düse auf ein oder mehrere Zielobjekte gefördert, während der Nutzer durch das Zielgebiet schreitet. Die Aufwandmenge ist abhängig von der Schrittgeschwindigkeit, der Sprühbreite und der pro Zeiteinheit geförderten Menge an Sprühmittel. Da die genannten Applikationsparameter während eines Applikationsvorgangs üblicherweise variieren (der Mensch ist keine Maschine), ist die Aufwandmenge über das Zielgebiet ungleichmäßig. Das kann zur Folge haben, dass zu wenig oder zu viel Sprühmittel appliziert wird. Eine zu geringe Aufwandmenge kann Unwirksamkeit des Sprühmittels zur Folge haben. Eine zu große Menge kann unnötige Kosten oder sogar Schäden verursachen.

Das Sprühmittel besteht dabei üblicherweise aus einer Trägerflüssigkeit (Wasser) und einem oder mehreren Wirkstoffen (z.B. ein Herbizid, Fungizid, Pestizid) und/oder Nährstoffen. Vor der Applikation muss das Sprühmittel zunächst durch Verdünnen (z.B.) eines Konzentrats mit einer Trägerflüssigkeit (Wasser) hergestellt werden. Dabei muss der richtige Verdünnungsgrad gefunden werden, um eine definierte Auftragsmenge an Wirkstoff/Nährstoffen pro Flächeneinheit zu erreichen. Dabei hängt der einzustellende Verdünnungsgrad von der Sprühbreite und von der Schrittgeschwindigkeit der Person ab, die den Sprühvorgang durchführt. Der richtige Verdünnungsgrad ist also davon abhängig, welche Düse(n) verwendet wird/werden, in welcher Höhe die Düse(n) über dem Zielgebiet geführt wird/werden, wie viel Sprühmittel pro Zeiteinheit aus der Düse / den Düsen austritt und wie schnell sich die Person durch das Zielgebiet bewegt.

WO2018/108696A1 offenbart ein tragbares Sprühgerät, das einen Durchflussmesser, einen Abstandssensor und einen Signalgeber umfasst. Das Sprühgerät ist so konfiguriert, dass es mit einem mobilen Computer (z.B. einem Smartphone) zusammenwirkt. Mit Hilfe eines GPS-Sensors und eines Zeitmessers des mobilen Computers kann die Schrittgeschwindigkeit des Nutzers des tragbaren Sprühgerätes ermittelt werden. Mit Hilfe des Flussmessers kann die pro Zeiteinheit abgegebene Aufwandmenge ermittelt werden. In einem vorgelagerten Kalibrierungsverfahren wird die Sprühbreite ermittelt. Mit dem Abstandssensor und dem Signalgeber kann für einen konstanten Abstand zwischen dem Düsenhalter des Sprühgeräts und den Zielobjekten gesorgt werden und damit - bei einem gleichbleibenden Abstand - eine gleichbleibende Sprühbreite gewährleistet werden: ist der Abstand zu groß oder zu klein, wird der Nutzer über den Signalgeber über den zu großen oder zu kleinen Abstand informiert, um den Abstand entsprechend zu korrigieren, damit die Sprühbreite konstant bleibt. WO2018/108696A1 offenbart damit Lösungen für die oben beschriebenen Probleme. Allerdings muss ein Nutzer, um in den Genuss der Lösungen zu kommen, ein neues, entsprechend ausgestattetes Sprühgerät erwerben. Vorteilhaft wäre es, die in WO2018/108696A1 beschriebenen Lösungen auch mit einem bereits vorliegenden Sprühgerät nutzen zu können.

Dies wird durch die vorliegende Erfindung nach Anspruch 1 ermöglicht.

Die Erfindung wird nachstehend näher erläutert, ohne zwischen den Erfindungsgegenständen (Überwachungsmodul, System, Verfahren, Computerprogrammprodukt) zu unterscheiden. Die nachfolgenden Erläuterungen sollen vielmehr für alle Erfindungsgegenstände in analoger Weise gelten, unabhängig davon, in welchem Kontext (Überwachungsmodul, System, Verfahren, Computerprogrammprodukt) sie erfolgen.

Sind bei der Beschreibung eines erfindungsgemäßen Verfahrens oder eines Computerprogrammprodukts Schritte in einer Reihenfolge aufgeführt, so bedeutet dies nicht zwangsläufig, dass die Schritte auch in der angegebenen Reihenfolge ausgeführt werden müssen. Die Erfindung soll vielmehr so verstanden werden, dass die in einer Reihenfolge aufgeführten Schritte in einer beliebigen Reihenfolge oder auch parallel zueinander ausgeführt werden können, es sei denn, ein Schritt basiert auf einem anderen Schritt, was aus der Beschreibung der Schritte jeweils deutlich wird. Die aufgeführten Reihenfolgen stellen bevorzugte Ausführungsformen der Erfindung dar.

Das erfindungsgemäße Überwachungsmodul dient der Verfolgung und/oder Überwachung (Kontrolle) und/oder Dokumentation eines Sprühvorgangs mittels eines Sprühgeräts, wobei der Sprühvorgang von einem menschlichen Nutzer vorgenommen wird. Ein Sprühvorgang beschreibt die Applikation eines oder mehrerer Sprühmittel auf ein oder mehrere Zielobjekte in einem Zielgebiet.

Das Überwachungsmodul ist ein von einem Sprühgerät unabhängiges, separates Gerät.

Das erfindungsgemäße Überwachungsmodul kann als ein Nachrüstsatz für bestehende (vorzugsweise tragbare) Sprühgeräte verstanden werden, mit dem die bestehenden Sprühgeräte mit erweiterten Funktionalitäten ausgestattet werden können, um Sprühvorgänge zu kontrollieren, zu verfolgen und/oder zu dokumentieren. Synonyme Begriffe für den Begriff "Überwachungsmodul" sind beispielsweise Überwachungseinheit, Überwachungsgerät, Sprühmittelapplikationskontrollmodul und/oder dergleichen.

Der Begriff "Sprühgerät(e)" umfasst Sprühgeräte, die von einem menschlichen Nutzer auf dem Rücken und/oder in der Hand transportiert werden können; der Begriff ist jedoch nicht auf solche Sprühgeräte beschränkt. Auch Sprühgeräte, die sich beispielsweise mit mechanischen Hilfsmitteln bewegen lassen (beispielsweise Fahrradspritzen) sollen von dem Begriff "Sprühgerät(e)" umfasst sein. Vorzugsweise handelt es sich bei dem Sprühgerät, in das das erfindungsgemäße Überwachungsmodul integriert werden kann, um ein tragbares Sprühgerät. Dabei bedeutet der Begriff "tragbar", dass das Sprühgerät von einem erwachsenen Menschen, der üblicherweise mit der Ausführung von Sprühaufgaben betraut wird, über eine Distanz z.B. von mehr als 100 Metern ohne elektrische und/oder motorbetriebene Hilfsmittel transportiert werden kann. Beispiele für tragbare Sprühgeräte sind offenbart in: WO2018/108696A1, DE102013109785A1, EP0143588A2, EP0256744A1, US20050121462A1, WO2018011009A1, WO2018011010A1, WO2018011011A1, WO2018011012A1, US2005/0006400A1, US2006/0102245A1, US20060249223A1, US2006/0261181A1, WO2013/165684A2, WO2015/087805A1 und US4790454.

Das erfindungsgemäße Überwachungsmodul ist zur einfachen Integration in eine Vielzahl an Sprühgeräten hergerichtet. Sprühgeräte umfassen üblicherweise einen Behälter, in dem sich das auszubringende Sprühmittel befindet. Ferner umfassen sie mindestens eine Düse, über die das Sprühmittel das Sprühgerät bei einem Sprühvorgang verlässt. Üblicherweise verwandelt die mindestens eine Düse das Sprühmittel, das durch sie hindurchtritt, in Tropfen mit einer spezifischen Tropfengrößenverteilung, die unter anderem vom Druck vor der Düse, von der Fließgeschwindigkeit des Sprühmittels und der Bauart der Düse abhängt.

Das erfindungsgemäße Überwachungsmodul wird in eine Leitung eines Sprühgeräts zwischen dem Behälter des Sprühgeräts und der mindestens einen Düse des Sprühgeräts eingebracht. Über die Leitung zwischen dem Behälter und der mindestens einen Düse stehen der Behälter und die mindestens eine Düse in einer Fluidverbindung. Das Überwachungsmodul wird in diese Fluidverbindung integriert, wobei die Fluidverbindung zwischen dem Behälter und der mindestens einen Düse (nach der Integration) aufrecht erhalten bleibt.

Zur Integration in eine Leitung weist das Überwachungsmodul zwei Verbindungselemente auf, ein erstes Verbindungselement und ein zweites Verbindungselement.

Das erste Verbindungselement dient der Verbindung des Überwachungsmoduls mit demjenigen Teil der Leitung, der stromaufwärts gerichtet ist. Darunter ist derjenige Teil der Leitung zu verstehen, der zum Behälter führt. Sprühmittel, das aus dem Behälter in Richtung der mindestens einen Düse fließt, fließt durch diesen Teil der Leitung und gelangt von dort in das Überwachungsmodul.

Das zweite Verbindungselement dient der Verbindung des Überwachungsmoduls mit demjenigen Teil der Leitung, der stromabwärts gerichtet ist. Darunter ist derjenige Teil der Leitung zu verstehen, der zu der mindestens einen Düse führt. Sprühmittel, das aus dem Behälter in Richtung der mindestens einen Düse fließt, fließt zunächst durch das Überwachungsmoduls und dann durch diesen Teil der Leitung zu der mindestens einen Düse.

Die Verbindungselemente können beispielsweise als Schlauchtüllen ausgeführt sein. Oftmals ist die Leitung zwischen dem Behälter und der mindestens einen Düse eines Sprühgeräts als flexibler Schlauch ausgeführt. Es ist denkbar, den Schlauch an einer Stelle zu durchtrennen und die dabei entstehenden beiden Schlauchenden (Schlauchöffnungen) über die beiden Schlauchtüllen des Überwachungsmoduls zu ziehen, wobei eine Schlauchtülle die Funktion des ersten Verbindungselements übernimmt und mit dem Schlauchende verbunden wird, über das man (stromaufwärts) zum Behälter gelangt, und die andere Schlauchtülle die Funktion des zweiten Verbindungselements übernimmt, über das man (stromabwärts) zu der mindestens einen Düse gelangt. Schlauchschellen können verwendet werden, um die Schlauchenden an den Tüllen zusätzlich zu fixieren.

Weitere mögliche Beispiele für Verbindungselemente sind zahlreich im Stand der Technik offenbart (siehe z.B. DE102017000008, DE19818085, DE102017004353, SE7611659, DE4139742, DE2523338, DE3218965, DE4211498, GB8511911, DE3617199, DE9319397).

Das erfindungsgemäße Überwachungsmodul umfasst eine Durchflusskammer. Sie befindet sich zwischen den beiden Verbindungselementen. Durch das in eine Leitung eines Sprühgeräts eingebrachte Überwachungsmodul wird das vom Behälter des Sprühgeräts in Richtung der mindestens einen Düse des Sprühgeräts fließende Sprühmittel gezwungen, durch die Durchflusskammer zu fließen.

In der Durchflusskammer befindet sich ein Durchflussmesser. Mit diesem Durchflussmesser wird die Menge des pro Zeiteinheit durch die Durchflusskammer hindurchfließenden Sprühmittels erfasst. Unter Menge wird je nach verwendetem Messverfahren das Volumen oder die Masse verstanden.

Der Durchflussmesser ist beispielsweise ein Flügelradsensor, ein magnetisch-induktiver Durchflussmesser, ein Schwebekörper-Durchflussmesser, ein Ultraschall-Durchflussmesser, ein Coriolis-Massendurchflussmesser, ein kalorimetrischer Durchflussmesser oder ein Vortex-Durchflussmesser. Denkbar ist aber auch die Verwendung einer Messblende oder einer Staudrucksonde. Details zur Durchflussmessung können beispielsweise dem folgenden Lehrbuch entnommen werden: K.W. Bonfig: Technische Durchflussmessung, Vulkan-Verlag Essen, 3. Auflage, 2002, ISBN 3-8027-2190-X.

In einer bevorzugten Ausführungsform wird ein Flügelradsensor zur Durchflussmessung eingesetzt. Das Messprinzip beruht darauf, dass ein Flügelrad eine Drehzahl proportional zur Strömungsgeschwindigkeit eines Fluids annimmt, durch das das Flügelrad angetrieben wird. Zur Messung der Drehzahl kann ein Permanentmagnet an das Flügelrad angebracht sein, der sich mit dem Flügelrad mitbewegt. Ein Hall-Sensor, an dem sich der Permanentmagnet vorbeibewegt, kann als Impulszähler verwendet werden. Die pro Zeiteinheit gemessene Anzahl von Impulsen ist proportional zur Drehzahl des Flügelrads und damit zur Strömungsgeschwindigkeit des Fluids.

Das Überwachungsmodul umfasst ferner eine Steuereinheit, eine Sendeeinheit und eine Energieversorgungseinheit. Die Steuereinheit dient der Steuerung der elektrischen/elektronischen Komponenten des Überwachungsmoduls, insbesondere der Steuerung der Messwerterfassung, ggf. des Speicherns von Messdaten, ggf. der Durchführung von Berechnungen und des Versendens von Daten mit Hilfe der Sendeeinheit an ein Computersystem. Die Steuereinheit umfasst üblicherweise einen Prozessor, einen Programmspeicher und einen Arbeitsspeicher. Die Steuereinheit kann ferner einen nicht-flüchtigen Datenspeicher umfassen, der vorzugsweise als Halbleiterspeicher ausgeführt ist, und der zum Beispiel der Speicherung von Messwerten und/oder von Ergebnissen von Berechnungen dienen kann.

Die Energieversorgungseinheit dient der Versorgung des Durchflussmessers, der Steuereinheit, der Sendeeinheit und ggf. weiterer elektrisch angetriebener Komponenten des Überwachungsmoduls mit elektrischer Energie. Bei der Energieversorgungseinheit kann es sich beispielsweise um eine elektrochemische Zelle (Batterie) oder einen wieder aufladbaren Akkumulator handeln.

Über die Sendeeinheit werden Daten von dem Überwachungsmodul an ein separates Computersystem übermittelt. Vorzugsweise erfolgt die Übermittlung von Daten über eine kurzreichweitige Funkverbindung wie beispielsweise Bluetooth, Zigbee, Z-Wave, EnOcean und/oder dergleichen, besonders bevorzugt über Bluetooth LE (Low Energy).

In einer bevorzugten Ausführungsform umfasst das Überwachungsmodul
- ein Gehäuse,
- ein erstes Verbindungselement, das an dem Gehäuse angebracht ist,
- ein zweites Verbindungselement, das an dem Gehäuse angebracht ist,
- eine Durchflusskammer in dem Gehäuse zwischen dem ersten Verbindungselement und dem zweiten Verbindungselement,
- einen Durchflussmesser in der Durchflusskammer zum Messen einer Menge an Sprühmittel, die pro Zeiteinheit durch die Durchflusskammer fließt,
- eine Sendeeinheit in dem Gehäuse außerhalb der Durchflusskammer,
- eine Steuereinheit in dem Gehäuse außerhalb der Durchflusskammer, wobei die Steuereinheit konfiguriert ist, Messwerte vom Durchflussmesser zu empfangen und die Sendeeinheit zu veranlassen, Daten zur Menge des Sprühmittels, die pro Zeiteinheit durch die Durchflusskammer fließt, an ein Computersystem zu übermitteln, und
- eine Energieversorgungseinheit in dem Gehäuse außerhalb der Durchflusskammer zur Versorgung des Durchflussmessers, der Steuereinheit und der Sendeeinheit mit elektrischer Energie.

Vorzugsweise weist das Gehäuse Mittel zum Befestigen des Gehäuses an einem Sprühgerät auf. Es ist denkbar, dass mehrere Gehäuse vorhanden sind. Die Gehäuse können ineinander verschachtelt sein oder separat voneinander vorliegen. Z.B. kann es ein (separates) Gehäuse für die Energieversorgungseinheit, für die Steuereinheit und/oder die Sendeeinheit geben.

Ein weiterer Gegenstand der vorliegenden Erfindung ist ein Verfahren zum Ausstatten eines vorzugsweise tragbaren Sprühgeräts mit einem Überwachungsmodul umfassend die folgenden Schritte:
- Bereitstellen eines Überwachungsmoduls, wobei das Überwachungsmodul umfasst:
   - ein erstes Verbindungselement,
   - ein zweites Verbindungselement,
   - eine Durchflusskammer zwischen dem ersten Verbindungselement und dem zweiten Verbindungselement,
   - einen Durchflussmesser zum Messen einer Menge an Sprühmittel, die pro Zeiteinheit durch die Durchflusskammer fließt,
   - eine Sendeeinheit,
   - eine Steuereinheit, wobei die Steuereinheit konfiguriert ist, Messwerte vom Durchflussmesser zu empfangen und die Sendeeinheit zu veranlassen, Daten zur Menge des Sprühmittels, die pro Zeiteinheit durch die Durchflusskammer fließt, an ein Computersystem zu übermitteln,
   - eine Energieversorgungseinheit zur Versorgung des Durchflussmessers, der Steuereinheit und der Sendeeinheit mit elektrischer Energie,
- Bereitstellen eines vorzugsweise tragbaren Sprühgeräts, wobei das Sprühgerät umfasst:
   - einen Behälter zur Aufnahme von Sprühmittel
   - mindestens eine Düse, und
   - eine Leitung zwischen dem Behälter und der mindestens einen Düse
- Integrieren des Überwachungsmoduls in die Leitung zwischen dem Behälter und der mindestens einen Düse.

Der Schritt "Integrieren des Überwachungsmoduls in die Leitung zwischen dem Behälter und der mindestens einen Düse" bewirkt, dass Sprühmittel, das vom Behälter zur mindestens einen Düse fließt, durch die Durchflusskammer das Überwachungsmoduls fließt,

Der Schritt "Integrieren des Überwachungsmoduls in die Leitung zwischen dem Behälter und der mindestens einen Düse" kann folgende Teilschritte umfassen:
- Trennen der Leitung zwischen dem Behälter und der mindestens einen Düse, wobei eine erste Leitungsöffnung und eine zweite Leitungsöffnung entstehen, wobei die erste Leitungsöffnung (stromaufwärts) in Richtung des Behälters führt, wobei die zweite Leitungsöffnung (stromabwärts) in Richtung der mindestens einen Düse führt,
- Verbinden des ersten Verbindungselements mit der ersten Leitungsöffnung und Verbinden des zweiten Verbindungselements mit der zweiten Leitungsöffnung.

Das erfindungsgemäße Überwachungsmodul ist zum Zusammenwirken mit einem Computersystem hergerichtet. Vorzugsweise handelt es sich bei dem Computersystem um ein mobiles Computersystem. Zwischen dem erfindungsgemäßen Überwachungsmodul und dem Computersystem kann eine (kommunikative) Verbindung aufgebaut werden, über die Daten vom Überwachungsmodul zum Computersystem übermittelt wird. Denkbar ist auch eine umgekehrte Übermittlung von Daten vom Computersystem zum Überwachungsmodul. Im letzteren Fall verfügt das Überwachungsmodul über eine Empfangseinheit zum Empfang der übermittelten Daten.

Denkbar ist, dass das erfindungsgemäße Überwachungsmodul und das Computersystem während einer Zeitspanne, in der der Durchflussmesser Messwerte erfasst, dauerhaft miteinander verbunden sind (z.B. über eine Bluetooth-Verbindung) und die Messwerte und/oder daraus abgeleitete Daten von dem Überwachungsmodul an das Computersystem übermittelt werden. Denkbar ist jedoch auch, dass Daten nur zu definierten Zeitpunkten und/oder bei Eintritt definierter Ereignisse übertragen werden. Denkbar ist zum Beispiel, dass die Messwerte und/oder daraus abgeleitete Daten in einem Datenspeicher des Überwachungsmoduls gespeichert werden. Denkbar ist, dass ein Nutzer z.B. nach Abschluss eines Sprühvorgangs eine Übertragung von (gespeicherten) Daten initiiert, beispielsweise durch Eingabe eines entsprechenden Befehls in eine Eingabeeinheit des Übertragungsmoduls und/oder des Computersystems.

Ein "Computersystem" ist ein System zur elektronischen Datenverarbeitung, das mittels programmierbarer Rechenvorschriften Daten verarbeitet. Ein solches System umfasst üblicherweise einen "Computer", diejenige Einheit, die einen Prozessor zur Durchführung logischer Operationen umfasst, sowie eine Peripherie.

Als "Peripherie" bezeichnet man in der Computertechnik alle Geräte, die an den Computer angeschlossen sind, und zur Steuerung des Computers und/oder als Ein- und Ausgabegeräte dienen. Beispiele hierfür sind Monitor (Bildschirm), Drucker, Scanner, Maus, Tastatur, Laufwerke, Kamera, Mikrofon, Lautsprecher, berührungsempfindliches Display etc. Auch interne Anschlüsse und Erweiterungskarten gelten in der Computertechnik als Peripherie.

Unter dem Begriff "mobil" wird verstanden, dass ein Nutzer des Computersystems dieses mit sich führen kann. Computersysteme von heute werden häufig in Desktop-PCs, Portable PCs, Laptops, Notebooks, Netbooks und Tablet-PCs und so genannte Handhelds (z.B. Smartphone) unterteilt. Ein mobiles Computersystem ist vorzugsweise ein Tablet-PC oder ein Handheld-Computer, besonders bevorzugt ein Smartphone oder eine Smartwatch.

Die Eingaben in das Computersystem erfolgen über Eingabemittel wie beispielsweise eine Tastatur, eine Maus, ein Mikrofon, ein berührungsempfindliches Display und/oder dergleichen. Als Eingabe soll auch die Auswahl eines Eintrags aus einem virtuellen Menü oder einer virtuellen Liste oder das Anklicken eines Auswahlkästchens und dergleichen verstanden werden.

Ausgaben des Computersystems erfolgen üblicherweise über einen Bildschirm, einen Drucker, einen Lautsprecher oder durch Speichern auf einem Datenspeicher.

Üblicherweise umfasst das Computersystem also eine Eingabeeinheit zur Eingabe von Daten und/oder Steuerbefehlen in das Computersystem und eine Ausgabeeinheit zur Ausgabe von Daten und/oder Informationen. Das Computersystem umfasst ferner eine Empfangseinheit zum Empfang von Daten, die beispielsweise über eine Funkverbindung an das Computersystem übermittelt werden. Das Computersystem kann ferner eine Sendeeinheit umfassen, mit der Daten von dem Computersystem an das Überwachungsmodul und/oder an ein anderes Computersystem übermittelt werden können. Selbstverständlich umfasst das Computersystem eine Energieversorgungseinheit, die die Komponenten des Computersystems mit elektrischer Energie versorgt.

Ein Überwachungsmodul und ein (vorzugsweise mobiles) Computersystem bilden ein erfindungsgemäßes System. Das erfindungsgemäße System kann auch mehrere Überwachungsmodule und/oder mehrere Computersysteme sowie weitere Komponenten umfassen.

Prinzipiell ist es denkbar, die Funktionalitäten eines erfindungsgemäßen Systems in ein einziges Gerät zu integrieren. Die Aufteilung der Funktionalitäten auf verschiedene Geräte (Überwachungsmodul, Computersystem, ggf. weitere Komponenten) erlaubt jedoch eine besonders kostengünstige Lösung, da mobile Computersysteme in Form von Smartphones, Smartwatches oder Tablet-Computern "allgegenwärtig" sind. Der Erfindung liegt daher der Gedanke zugrunde, möglichst viele Funktionen, die ein vorzugsweise mobiles Computersystem zur Verfügung stellt, für die Verfolgung und/oder Überwachung (Kontrolle) und/oder Dokumentation von Sprühvorgängen zu nutzen. In einer besonders bevorzugten Ausführungsform sind daher in das Überwachungsmodul nur diejenigen Komponenten integriert, die üblicherweise nicht von einem (mobilen) Computersystem zur Verfügung gestellt werden. Dies sind Mittel zum Integrieren des Überwachungsmoduls in eine Leitung eines Sprühgeräts und Mittel zum Bestimmen der Mengen an Sprühmittel, die appliziert werden. Das Bestimmen der Mengen an Sprühmittel, die appliziert werden, erfolgt mittels des Durchflussmessers. Ferner sind Mittel nötig, um die vom Durchflussmesser erfassten Messwerte und/oder daraus abgeleitete Daten an das Computersystem zu übermitteln, um diese Daten für weitere Zwecke zu nutzen (Berechnungen durchführen, mit weiteren Daten verknüpfen, anzeigen, speichern und/oder dergleichen). Es ist jedoch grundsätzlich denkbar, dass Funktionen, die üblicherweise von einem (mobilen) Computersystem zur Verfügung gestellt werden, von dem Überwachungsmodul bereitgestellt werden.

Bestandteile des erfindungsgemäßen Systems können beispielsweise eine Routenverfolgungseinheit und eine Mengenermittlungseinheit sein. Dabei können die genannten Komponenten in einem einzigen Gerät integriert oder auf mehrere Geräte verteilt sein. Sie können allein oder gemeinsam Bestandteile des Überwachungsmoduls und/oder des Computersystems sein. Sie können jedoch allein oder gemeinsam auch Bestandteile von separaten (vom Überwachungsmodul und/oder Computersystem) unabhängigen Geräten sein.

Die Routenverfolgungseinheit ist vorzugsweise ein Bestandteil des (mobilen) Computersystem. Bestandteile der Routenverfolgungseinheit sind üblicherweise ein GPS-Sensor und ein Zeitmesser.

Die Routenverfolgungseinheit ist konfiguriert, eine Route zu verfolgen. Der Begriff "eine Route zu verfolgen" bedeutet, dass die Routenverfolgungseinheit konfiguriert ist, in definierten Zeitabständen und/oder zu definierten Zeitpunkten und/oder bei Eintritt definierter Ereignisse die Position mittels eines GPS-Sensors zu bestimmen (wobei die Position des GPS-Sensors bestimmt wird) und die Position in einem Datenspeicher (vorzugsweise zusammen mit dem Zeitpunkt, zu dem die Position bestimmt worden ist) zu speichern.

Ein GPS-Sensor (GPS: Globales Positionsbestimmungssystem) ist Teil eines Satellitennavigationssystems zur Positionsbestimmung. Ein Satellitennavigationssystem basiert auf Satelliten, die mit kodierten Radiosignalen fortwährend ihre aktuelle Position und die genaue Uhrzeit ausstrahlen. Aus den Signallaufzeiten kann ein Empfänger (in dieser Beschreibung als der GPS-Sensor bezeichnet) seine eigene Position und Geschwindigkeit berechnen. Bekannte Satellitennavigationssysteme sind beispielsweise NAVSTAR GPS, GLONASS, Galileo oder Beidou. Der Begriff "GPS-Sensor" soll nicht limitierend im Hinblick auf das GPS-Satellitennavigationssystem verstanden werden; er soll auch Empfänger anderer Satellitennavigationssysteme umfassen.

Mit der Routenverfolgungseinheit kann die Position des GPS-Sensors ermittelt werden. Wird der GPS-Sensor mit dem Überwachungsmodul und/oder mit dem Sprühgerät und/oder mit dem mobilen Computersystem mitgeführt, so kann die Position des Überwachungsmoduls und/oder des Sprühgeräts und/oder des mobilen Computersystems ermittelt werden. Während eines Sprühvorgangs bewegt ein Nutzer das Sprühgerät zusammen mit dem Überwachungsmodul (und ggf. dem mobilen Computersystem) durch ein Zielgebiet, in dem der Nutzer eine Fläche oder ein oder mehrere Zielobjekte mit einem Sprühmittel besprüht. Die Route, die der Nutzer hierbei zurücklegt, kann mit der Routenverfolgungseinheit verfolgt und aufgezeichnet (in einem Datenspeicher gespeichert) werden. Ferner können die Geschwindigkeiten, mit denen sich der Nutzer durch das Zielgebiet bewegt, erfasst, verfolgt und aufgezeichnet werden.

Das "Zielgebiet" ist der räumliche Bereich, in dem ein oder mehrere Zielobjekte mit einem oder mehreren Sprühmittel(n) besprüht werden/werden soll(en).

Beim "Zielobjekt" / bei den "Zielobjekten" kann es sich um eine oder mehrere Pflanzen, einen oder mehrere Bereiche eines Feldes (z.B. der Ackerboden), um Wände, Wege, Straßen, Schienen oder andere Objekte handeln. Dabei kann ein Zielgebiet auch Zielobjekte umfassen, die während der Applikation mit unterschiedlichen Mengen eines Sprühmittels oder mit unterschiedlichen Sprühmitteln behandelt werden sollen.

Die Mengenermittlungseinheit kann ein Bestandteil des Überwachungsmoduls oder des mobilen Computersystems sein. Mit der Mengenermittlungseinheit werden die Mengen an Sprühmittel ermittelt, die pro Zeiteinheit mit dem Sprühgerät appliziert werden. Die Mengenermittlungseinheit empfängt die Messwerte des Durchflussmessers und berechnet daraus die Mengen an appliziertem Sprühmittel. Die Mengenermittlungseinheit kann konfiguriert sein, die Aufwandmengen des in dem Sprühmittel enthaltenen Wirkstoffs pro Flächeneinheit zu berechnen. Die Berechnung erfolgt vorzugsweise anhand der folgenden Größen:
- Sprühbreite,
- Konzentration des Wirkstoffs in dem Sprühmittel,
- Mengen an Sprühmittel, die pro Zeiteinheit durch die Durchflusskammer fließen, und
- Geschwindigkeiten, mit denen sich der Nutzer durch das Zielgebiet bewegt.

Die Sprühbreite kann durch einen Nutzer eingegeben werden und/oder in einem Kalibrierungsverfahren, das weiter unten beschrieben ist, empirisch ermittelt werden. Je nach Konfiguration, etwa bei Verwendung eines Balkens mit mehreren Düsen, kann die Sprühbreite auch bereits bekannt und als Parameter in einem Datenspeicher gespeichert sein.

Die Konzentration des Wirkstoffs in dem Sprühmittel kann ebenfalls durch einen Nutzer eingegeben werden. Denkbar ist auch, dass der Nutzer das Produkt, das er als Sprühmittel verwendet, spezifiziert, indem er beispielsweise den Namen des Produkts oder eine Kennung des Produkts in das mobile Computersystem eingibt und das Computersystem dann anhand des Produktnamens oder der Produktkennung die Konzentration des Wirkstoffs in dem Produkt aus einem Datenspeicher ermittelt. Denkbar ist ferner, dass die Mengenermittlungseinheit die Konzentration des Wirkstoffs in dem Sprühmittel berechnet - wie weiter unten beim Kalibrierungsverfahren beschrieben.

Die Mengen an Sprühmittel, die pro Zeiteinheit durch die Durchflusskammer fließen, werden von dem Durchflussmesser in der Durchflusskammer des Überwachungsmoduls gemessen.

Die Geschwindigkeiten, mit denen sich der Nutzer durch das Zielgebiet bewegt, werden von der Routenverfolgungseinheit ermittelt.

Die Mengenermittlungseinheit kann ferner konfiguriert sein, die Informationen über die jeweiligen Positionen des GPS-Sensors (und damit des Sprühgerätes und des Überwachungsmoduls), mit den an den Positionen ausgebrachten Mengen an Sprühmittel pro Zeiteinheit und/oder pro Flächeneinheit und/oder mit der an den Positionen ausgebrachten Aufwandmengen an Wirkstoff pro Flächeneinheit zusammenzubringen, so dass für jede Position auch die dort ausgebrachte Menge pro Zeiteinheit / Aufwandmenge pro Flächeneinheit verfügbar ist.

In einer Ausführungsform ist die Mengenermittlungseinheit konfiguriert
- eine Sprühbreite zu empfangen,
- Geschwindigkeiten entlang einer Route zu empfangen
- Mengen an Sprühmittel, die pro Zeiteinheit entlang der Route appliziert werden/worden sind, zu empfangen und
- aus den empfangenen Daten (Sprühbreite, Geschwindigkeiten, Mengen an Sprühmittel pro Zeiteinheit) Mengen an Sprühmittel, die pro Flächeneinheit entlang der Route appliziert werden/worden sind, zu ermitteln.

In einer weiteren Ausführungsform ist die Mengenermittlungseinheit ferner konfiguriert
- eine Konzentration eines Wirkstoffs in dem Sprühmittel zu ermitteln,
- Aufwandmengen des Wirkstoffs pro Flächeneinheit entlang der Route zu ermitteln.

Eine Ausführungsform des erfindungsgemäßen Überwachungsmoduls umfasst:
- ein erstes Verbindungselement und ein zweites Verbindungselement zum Integrieren des Überwachungsmoduls in eine Leitung eines vorzugsweise tragbaren Sprühgeräts zwischen einem Behälter für Sprühmittel und mindestens einer Düse, wobei das erste Verbindungselement so ausgeführt ist, dass es mit einem stromaufwärts gerichteten Teil der Leitung des Sprühgeräts verbindbar ist, wobei das zweite Verbindungselement so ausgeführt ist, dass es mit einem stromabwärts gerichteten Teil der Leitung des Sprühgeräts verbindbar ist,
- eine Durchflusskammer zwischen dem ersten Verbindungselement und dem zweiten Verbindungselement,
- einen Durchflussmesser zum Messen von Mengen an Sprühmittel, die pro Zeiteinheit durch die Durchflusskammer fließen,
- eine Steuereinheit,
- eine Mengenermittlungseinheit,
- eine Sendeeinheit und
- eine Energieversorgungseinheit zur Versorgung des Durchflussmessers, der Steuereinheit, der Mengenermittlungseinheit und der Sendeeinheit mit elektrischer Energie.
   ∘ wobei die Steuereinheit konfiguriert ist, Messwerte vom Durchflussmesser zu empfangen,
   ∘ wobei die Steuereinheit konfiguriert ist, die Mengenermittlungseinheit zu veranlassen, anhand der empfangenen Messwerte Mengen an Sprühmittel zu ermitteln, die pro Zeiteinheit mit dem Sprühgerät appliziert werden oder worden sind,
   ∘ wobei die Steuereinheit konfiguriert ist, die Sendeeinheit zu veranlassen, Informationen zu den Mengen an Sprühmittel, die pro Zeiteinheit mit dem Sprühgerät appliziert werden oder worden sind, an ein Computersystem zu übermitteln.

Eine weitere Ausführungsform des erfindungsgemäßen Überwachungsmoduls umfasst:
- ein erstes Verbindungselement und ein zweites Verbindungselement zum Integrieren des Überwachungsmoduls in eine Leitung eines vorzugsweise tragbaren Sprühgeräts zwischen einem Behälter für Sprühmittel und mindestens einer Düse, wobei das erste Verbindungselement so ausgeführt ist, dass es mit einem stromaufwärts gerichteten Teil der Leitung des Sprühgeräts verbindbar ist, wobei das zweite Verbindungselement so ausgeführt ist, dass es mit einem stromabwärts gerichteten Teil der Leitung des Sprühgeräts verbindbar ist,
- eine Durchflusskammer zwischen dem ersten Verbindungselement und dem zweiten Verbindungselement,
- einen Durchflussmesser zum Messen einer Menge an Sprühmittel, die pro Zeiteinheit durch die Durchflusskammer fließt,
- eine Steuereinheit,
- eine Sendeeinheit,
- eine Routenverfolgungseinheit,
- eine Mengenermittlungseinheit, und
- eine Energieversorgungseinheit zur Versorgung des Durchflussmessers, der Steuereinheit, der Sendeeinheit, der Routenverfolgungseinheit und der Mengenermittlungseinheit mit elektrischer Energie,
   - wobei die Steuereinheit konfiguriert ist, Messwerte vom Durchflussmesser zu empfangen,
   - wobei die Steuereinheit konfiguriert ist, die Routenverfolgungseinheit zu veranlassen, eine Route zu verfolgen,
   - wobei die Steuereinheit konfiguriert ist, die Mengenermittlungseinheit zu veranlassen, anhand der empfangenen Messwerte Mengen von Sprühmittel, die entlang der Route appliziert werden oder worden sind, zu ermitteln,
   - wobei die Steuereinheit konfiguriert ist, die Sendeeinheit zu veranlassen, Informationen zu der Route und zu den Mengen an Sprühmittel, die entlang der Route appliziert werden oder worden sind, an ein Computersystem zu übermitteln.

Eine weitere Ausführungsform des erfindungsgemäßen Überwachungsmoduls umfasst:
- eine Routenverfolgungseinheit mit einem GPS-Sensor und einem Zeitmesser und eine Mengenermittlungseinheit,
- wobei die Routenverfolgungseinheit konfiguriert ist, eine Route zu verfolgen,
- wobei die Mengenermittlungseinheit konfiguriert ist, Mengen von Sprühmittel, die entlang der Route appliziert werden oder worden sind, zu ermitteln,
- wobei die Steuereinheit konfiguriert ist, die Sendeeinheit zu veranlassen, Informationen zu der Route und zu den Mengen an Sprühmittel, die entlang der Route appliziert werden oder worden sind, über ein Netzwerk an das Computersystem zu übermitteln.

In einer weiteren Ausführungsform umfasst das erfindungsgemäße System:
ein Überwachungsmodul,
eine Mengenermittlungseinheit,
eine Routenverfolgungseinheit und
ein Computersystem
   - wobei das Überwachungsmodul ein erstes Verbindungselement und ein zweites Verbindungselement zum Integrieren des Überwachungsmoduls in eine Leitung eines Sprühgeräts zwischen einem Behälter für Sprühmittel und mindestens einer Düse umfasst,
   - wobei das erste Verbindungselement so ausgeführt ist, dass es mit einem stromaufwärts gerichteten Teil der Leitung des Sprühgeräts verbindbar ist,
   - wobei das zweite Verbindungselement so ausgeführt ist, dass es mit einem stromabwärts gerichteten Teil der Leitung des Sprühgeräts verbindbar ist,
   - wobei das Überwachungsmodul eine Durchflusskammer zwischen dem ersten Verbindungselement und dem zweiten Verbindungselement umfasst,
   - wobei das Überwachungsmodul einen Durchflussmesser zum Messen einer Menge eines pro Zeiteinheit durch die Durchflusskammer fließenden Sprühmittels umfasst,
   - wobei die Mengenermittlungseinheit konfiguriert ist, anhand von Messwerten des Durchflussmessers Mengen an Sprühmittel zu ermitteln, die pro Zeiteinheit mit dem Sprühgerät appliziert werden,
   - wobei die Routenverfolgungseinheit konfiguriert ist, eine Route zu verfolgen,
   - wobei das Computersystem konfiguriert ist, Informationen zu den Mengen an Sprühmittel, die entlang der Route appliziert worden sind, gegenüber einem Nutzer anzuzeigen.

In einer weiteren Ausführungsform der vorliegenden Erfindung umfasst das erfindungsgemäße System
- ein Überwachungsmodul und
- ein mobiles Computersystem,

wobei das Überwachungsmodul umfasst:
   - ein erstes Verbindungselement und ein zweites Verbindungselement zum Integrieren des Überwachungsmoduls in eine Leitung eines vorzugsweise tragbaren Sprühgeräts zwischen einem Behälter für Sprühmittel und mindestens einer Düse, wobei das erste Verbindungselement so ausgeführt ist, dass es mit einem stromaufwärts gerichteten Teil der Leitung des Sprühgeräts verbindbar ist, wobei das zweite Verbindungselement so ausgeführt ist, dass es mit einem stromabwärts gerichteten Teil der Leitung des Sprühgeräts verbindbar ist,
   - eine Durchflusskammer zwischen dem ersten Verbindungselement und dem zweiten Verbindungselement,
   - einen Durchflussmesser zum Messen von Mengen an Sprühmittel, die pro Zeiteinheit durch die Durchflusskammer fließen,
   - eine Steuereinheit und eine Sendeeinheit, wobei die Steuereinheit konfiguriert ist, Messwerte vom Durchflussmesser zu empfangen und die Sendeeinheit zu veranlassen, Daten zu den Mengen an Sprühmittel, die pro Zeiteinheit durch die Durchflusskammer fließen, vorzugsweise über eine kurzreichweitige Funkverbindung an das Computersystem zu übermitteln,
   - eine Energieversorgungseinheit zur Versorgung des Durchflussmessers, der Steuereinheit und der Sendeeinheit mit elektrischer Energie,
wobei das Computersystem umfasst:
   - eine Empfangseinheit, eine Steuereinheit, eine Mengenermittlungseinheit, eine Routenverfolgungseinheit und eine Ausgabeeinheit,
      - wobei die Steuereinheit konfiguriert ist, die Empfangseinheit zu veranlassen, die Daten zu den Mengen an Sprühmittel, die pro Zeiteinheit durch die Durchflusskammer fließen, von dem Überwachungsmodul vorzugsweise über die kurzreichweitige Funkverbindung zu empfangen,
      - wobei die Steuereinheit konfiguriert ist, die Routenverfolgungseinheit zu veranlassen, eine Route zu verfolgen,
      - wobei die Steuereinheit konfiguriert ist, die Mengenermittlungseinheit zu veranlassen, anhand der empfangenen Daten zu den Mengen an Sprühmittel, die pro Zeiteinheit durch die Durchflusskammer fließen, Mengen an Sprühmittel zu ermitteln, die pro Zeiteinheit mit dem Sprühgerät entlang der Route appliziert werden,
      - wobei die Steuereinheit konfiguriert ist, die Ausgabeeinheit zu veranlassen, Informationen zu der Route und zu den Mengen an Sprühmittel, die entlang der Route appliziert werden oder worden sind, gegenüber einem Nutzer anzuzeigen.

**In** einer weiteren bevorzugten Ausführungsform der vorliegenden Erfindung umfasst das erfindungsgemäße System
- ein Überwachungsmodul und
- ein mobiles Computersystem,

wobei das Überwachungsmodul umfasst:
   - ein erstes Verbindungselement und ein zweites Verbindungselement zum Integrieren des Überwachungsmoduls in eine Leitung eines vorzugsweise tragbaren Sprühgeräts zwischen einem Behälter für Sprühmittel und mindestens einer Düse, wobei das erste Verbindungselement so ausgeführt ist, dass es mit einem stromaufwärts gerichteten Teil der Leitung des Sprühgeräts verbindbar ist, wobei das zweite Verbindungselement so ausgeführt ist, dass es mit einem stromabwärts gerichteten Teil der Leitung des Sprühgeräts verbindbar ist,
   - eine Durchflusskammer zwischen dem ersten Verbindungselement und dem zweiten Verbindungselement,
   - einen Durchflussmesser zum Messen von Mengen an Sprühmittel, die pro Zeiteinheit durch die Durchflusskammer fließen,
   - eine Steuereinheit,
   - eine Mengenermittlungseinheit,
   - eine Sendeeinheit und
   - eine Energieversorgungseinheit zur Versorgung des Durchflussmessers, der Steuereinheit, der Mengenermittlungseinheit und der Sendeeinheit mit elektrischer Energie.
      ∘ wobei die Steuereinheit konfiguriert ist, Messwerte vom Durchflussmesser zu empfangen,
      ∘ wobei die Steuereinheit konfiguriert ist, die Mengenermittlungseinheit zu veranlassen, anhand der empfangenen Messwerte Mengen an Sprühmittel zu ermitteln, die pro Zeiteinheit mit dem Sprühgerät appliziert werden oder worden sind,
      ∘ wobei die Steuereinheit konfiguriert ist, die Sendeeinheit zu veranlassen, Informationen zu den Mengen an Sprühmittel, die pro Zeiteinheit mit dem Sprühgerät appliziert werden oder worden sind, vorzugsweise über eine kurzreichweitige Funkverbindung an das Computersystem zu übermitteln
wobei das Computersystem umfasst:
   - eine Empfangseinheit, eine Steuereinheit, eine Routenverfolgungseinheit und eine Ausgabeeinheit,
      ∘ wobei die Steuereinheit konfiguriert ist, die Empfangseinheit zu veranlassen, die Informationen zu den Mengen an Sprühmittel, die pro Zeiteinheit mit dem Sprühgerät appliziert werden oder worden sind, vorzugsweise über die kurzreichweitige Funkverbindung zu empfangen,
      ∘ wobei die Steuereinheit konfiguriert ist, die Routenverfolgungseinheit zu veranlassen, eine Route zu verfolgen,
      ∘ wobei die Steuereinheit ist, anhand der empfangenen Informationen und der verfolgten Route Mengen an Sprühmittel zu ermitteln, die pro Zeiteinheit mit dem Sprühgerät entlang der Route appliziert werden oder worden sind,
      ∘ wobei die Steuereinheit konfiguriert ist, die Ausgabeeinheit zu veranlassen, Informationen zu der Route und zu den Mengen an Sprühmittel, die entlang der Route appliziert werden oder worden sind, gegenüber einem Nutzer anzuzeigen.

In einer weiteren bevorzugten Ausführungsform der vorliegenden Erfindung umfasst das erfindungsgemäße System
- ein Überwachungsmodul und
- ein mobiles Computersystem,

wobei das Überwachungsmodul umfasst:
   - ein erstes Verbindungselement und ein zweites Verbindungselement zum Integrieren des Überwachungsmoduls in eine Leitung eines vorzugsweise tragbaren Sprühgeräts zwischen einem Behälter für Sprühmittel und mindestens einer Düse, wobei das erste Verbindungselement so ausgeführt ist, dass es mit einem stromaufwärts gerichteten Teil der Leitung des Sprühgeräts verbindbar ist, wobei das zweite Verbindungselement so ausgeführt ist, dass es mit einem stromabwärts gerichteten Teil der Leitung des Sprühgeräts verbindbar ist,
   - eine Durchflusskammer zwischen dem ersten Verbindungselement und dem zweiten Verbindungselement,
   - einen Durchflussmesser zum Messen von Mengen an Sprühmittel, die pro Zeiteinheit durch die Durchflusskammer fließen,
   - eine Steuereinheit,
   - eine Mengenermittlungseinheit,
   - eine Routenverfolgungseinheit,
   - eine Sendeeinheit und
   - eine Energieversorgungseinheit zur Versorgung des Durchflussmessers, der Steuereinheit, der Mengenermittlungseinheit, der Routenverfolgungseinheit und der Sendeeinheit mit elektrischer Energie,
      ∘ wobei die Steuereinheit konfiguriert ist, Messwerte vom Durchflussmesser zu empfangen,
      ∘ wobei die Steuereinheit konfiguriert ist, die Routenverfolgungseinheit zu veranlassen, eine Route zu verfolgen,
      ∘ wobei die Steuereinheit konfiguriert ist, die Mengenermittlungseinheit zu veranlassen, anhand der empfangenen Messwerte Mengen an Sprühmittel zu ermitteln, die pro Zeiteinheit mit dem Sprühgerät entlang der Route appliziert werden oder worden sind,
      ∘ wobei die Steuereinheit konfiguriert ist, die Sendeeinheit zu veranlassen, Informationen zu den Mengen an Sprühmittel, die pro Zeiteinheit mit dem Sprühgerät appliziert werden oder worden sind, vorzugsweise über ein Netzwerk an das Computersystem zu übermitteln
wobei das Computersystem umfasst:
   - eine Empfangseinheit, eine Steuereinheit und eine Ausgabeeinheit,
      ∘ wobei die Steuereinheit konfiguriert ist, die Empfangseinheit zu veranlassen, die Informationen zu den Mengen an Sprühmittel, die pro Zeiteinheit mit dem Sprühgerät entlang der Route appliziert werden oder worden sind, vorzugsweise über das Netzwerk zu empfangen,
      ∘ wobei die Steuereinheit konfiguriert ist, die Ausgabeeinheit zu veranlassen, die Informationen zu den Mengen an Sprühmittel, die entlang der Route appliziert werden oder worden sind, gegenüber einem Nutzer anzuzeigen.

Vorzugsweise handelt es sich bei dem Netzwerk zumindest anteilig um ein Mobilfunknetz, über das Daten nach einem Mobilfunkstandard (wie z.B. GSM, GPRS, UMTS, 2G, 3G, LTE, 4G oder 5G) übertragen werden.

In einer weiteren bevorzugten Ausführungsform der vorliegenden Erfindung umfasst das erfindungsgemäße System
- ein Überwachungsmodul und
- ein mobiles Computersystem,
   - wobei das Überwachungsmodul eine Routenverfolgungseinheit mit einem GPS-Sensor und einem Zeitmesser, eine Sendeeinheit und eine Mengenermittlungseinheit umfasst,
   - wobei das Überwachungsmodul einen Durchflussmesser zum Messen einer Menge eines pro Zeiteinheit durch die Durchflusskammer fließenden Sprühmittels umfasst,
   - wobei die Mengenermittlungseinheit konfiguriert ist, anhand von Messwerten des Durchflussmessers Mengen an Sprühmittel zu ermitteln, die pro Zeiteinheit mit dem Sprühgerät appliziert werden,
   - wobei die Routenverfolgungseinheit konfiguriert ist, eine Route zu verfolgen,
   - wobei die Mengenermittlungseinheit konfiguriert ist, Informationen zu der Route und zu den Mengen an Sprühmittel, die entlang der Route appliziert worden sind, über ein Netzwerk an das Computersystem zu übermitteln.
   - wobei das Computersystem konfiguriert ist, die Route und die Informationen zu den Mengen an Sprühmittel, die entlang der Route appliziert worden sind, gegenüber einem Nutzer anzuzeigen.

In einer weiteren bevorzugten Ausführungsform der vorliegenden Erfindung umfasst das erfindungsgemäße System
- ein Überwachungsmodul umfassend eine Steuereinheit und eine Sendeeinheit,
- ein erstes Computersystem, das als mobiles Computersystem ausgeführt ist und das eine Routenverfolgungseinheit mit einem GPS-Sensor und einem Zeitmesser, eine Mengenermittlungseinheit und eine Sende- und Empfangseinheit umfasst,
- ein zweites Computersystem,
   - wobei das Überwachungsmodul einen Durchflussmesser zum Messen einer Menge eines pro Zeiteinheit durch die Durchflusskammer fließenden Sprühmittels umfasst,
   - wobei die Steuereinheit des Überwachungsmoduls konfiguriert ist, Messwerte vom Durchflussmesser zu empfangen und die Sendeeinheit zu veranlassen, Daten zur Menge des Sprühmittels, das pro Zeiteinheit durch die Durchflusskammer fließt, über ein erstes Netzwerk an das erste Computersystem zu übermitteln,
   - wobei die Routenverfolgungseinheit konfiguriert ist, eine Route zu verfolgen,
   - wobei die Routenverfolgungseinheit konfiguriert ist, Geschwindigkeiten entlang der Route zu ermitteln,
   - wobei die Mengenermittlungseinheit konfiguriert ist, die Mengen an Sprühmittel und/oder die Aufwandmengen eines in dem Sprühmittel enthaltenen Wirkstoffs, die entlang der Route appliziert worden sind, zu ermitteln,
   - wobei das erste Computersystem konfiguriert ist, Informationen zur Route und Informationen zu den entlang der Route applizierten Mengen an Sprühmittel und/oder Aufwandmengen an Wirkstoff über ein zweites Netzwerk an das Computersystem zu übermitteln,
   - wobei das zweite Computersystem konfiguriert ist, die Route und die Informationen zu den entlang der Route applizierten Mengen an Sprühmittel und/oder Aufwandmengen an Wirkstoff gegenüber einem Nutzer anzuzeigen.

Das erste Netzwerk umfasst vorzugsweise eine kurzreichweitige Funkverbindung zwischen der Überwachungsmodul und dem ersten Computersystem, vorzugsweise eine Bluetooth-, eine Zigbee- oder eine vergleichbare Verbindung.

Das zweite Netzwerk umfasst vorzugsweise eine langreichweitige Mobilfunkverbindung nach einem Mobilfunkstandard (wie z.B. nach dem GSM, GPRS, UMTS, 2G, 3G, LTE, 4G oder 5G).

Das erfindungsgemäße System kann ferner ein vorzugsweise tragbares Sprühgerät umfassen. Das Sprühgerät umfasst einen Behälter zur Aufnahme eines Sprühmittels, mindestens eine Düse, durch die das Sprühmittel aus dem Sprühgerät in Richtung eines Zielobjekts austritt, eine Leitung zwischen dem Behälter und der mindestens einen Düse und Mittel zum Fördern des Sprühmittels aus dem Behälter in Richtung der mindestens einen Düse (z.B. eine elektrisch oder manuell betriebene Pumpe). Das vorzugsweise tragbare Sprühgerät kann als Rucksackgerät ausgeführt sein und umfasst in einem solchen Fall z.B. Gurte zum Tragen auf dem Rücken einer Person.

Ein weiterer Gegenstand der vorliegenden Erfindung ist ein Verfahren umfassend die Schritte:
- Ausstatten eines tragbaren Sprühgerätes mit einem Überwachungsmodul, dadurch gekennzeichnet, dass das Überwachungsmodul in eine Leitung zwischen einem Behälter für Sprühmittel und einer Düse des tragbaren Sprühgerätes integriert wird, so dass Sprühmittel, das vom Behälter zur Düse fließt, durch eine Durchflusskammer des Überwachungsmoduls fließt,
- Erfassen einer Route, die das tragbare Sprühgerät während einer Zeitspanne zurücklegt,
- Erfassen der Mengen an Sprühmittel, die entlang der Route durch die Durchflusskammer fließen,
- Übermitteln von Daten zu der zurückgelegten Route und zu den Mengen an Sprühmittel über ein Netzwerk an ein Computersystem,
- Anzeigen der Route und von Informationen zu den Mengen an Sprühmittel, die entlang der Route appliziert worden sind, gegenüber einem Nutzer.

Vorzugsweise umfasst das Verfahren ferner die Schritte:
- Empfangen einer Sprühbreite,
- Empfangen von Informationen über einen Wirkstoff,
- Erfassen einer Route eines Nutzers während einer definierten Zeitspanne,
- Ermitteln von Geschwindigkeiten des Nutzers entlang der Route,
- Erfassen von Mengen an Sprühmittel, die pro Zeiteinheit entlang der Route von dem Nutzer ausgebracht werden,
- Ermitteln von Aufwandmengen des Wirkstoffs pro Flächeneinheit entlang der Route auf Basis der Geschwindigkeiten des Nutzers, der ausgebrachten Mengen an Sprühmittel und der Informationen über den Wirkstoff,
- Anzeigen der Route und der Aufwandmengen des Wirkstoffs pro Flächeneinheit entlang der Route.

Zu Beginn eines Sprühvorgangs kann eine Kalibrierung vorgenommen werden. Die Kalibrierung wird vorzugsweise durch ein Computerprogramm, das vorzugsweise auf einem mobilen Computersystem wie beispielsweise auf einem Smartphone installiert ist, und dort ausgeführt wird, unterstützt.

Der Nutzer des vorzugsweise mobilen Computersystems wird über das Computerprogramm aufgefordert, eine definierte Weglänge mit gleichbleibender Geschwindigkeit zurückzulegen (z.B. eine Weglänge von 10 Metern bis 100 Metern) oder sich während einer definierten Zeitspanne (z.B. 10 Sekunden bis z.B. eine Minute) mit gleichbleibender Geschwindigkeit fortzubewegen. Während der Bewegung des Nutzers soll der Nutzer Sprühmittel oder eine Testflüssigkeit (z.B. Wasser) mittels eines Sprühgeräts auf den Boden applizieren. Mittels eines GPS-Sensors und eines Zeitmessers wird eine mittlere Geschwindigkeit ermittelt, mit der sich der Nutzer bewegt. Bei der mittleren Geschwindigkeit handelt es sich vorzugsweise um eine arithmetisch gemittelte Geschwindigkeit. Mittels eines Durchflussmessers wird eine mittlere Menge an Sprühmittel oder Testflüssigkeit gemessen, die während der Bewegung des Nutzers pro Zeiteinheit aus mindestens einer Düse des tragbaren Sprühgeräts austritt (erfindungsgemäß wird die Flussmenge ermittelt, die durch die Durchflusskammer der erfindungsgemäßen Überwachungsmodul fließt; diese ist jedoch gleich der Flussmenge, die durch die mindestens eine Düse tritt). Vorzugsweise handelt es sich bei der mittleren Menge pro Zeiteinheit um die arithmetisch gemittelte Menge pro Zeiteinheit. Die mittlere Menge pro Zeiteinheit kann zum Beispiel in Form einer Masse pro Zeiteinheit (z.B. g/sec) oder in Form eines Volumens pro Zeiteinheit (z.B. L/min) angegeben werden.

Die erhaltenen Kalibrierungswerte (mittlere Geschwindigkeit und mittlere Menge pro Zeiteinheit) können verwendet werden, um weitere Berechnungen durchzuführen, Einstellungen vorzunehmen und/oder Vorbereitungen zu treffen.

Die erhaltenen Kalibrierungswerte können beispielsweise verwendet werden, um ein Sprühmittel anzusetzen. Viele Sprühmittel werden in Form eines Konzentrats angeboten, das gemäß Herstellerangaben mit einem Verdünnungsmittel (üblicherweise Wasser) verdünnt werden muss, bevor es eingesetzt werden kann. Oftmals wird dabei nicht der Verdünnungsgrad selbst angegeben, sondern es wird die Aufwandmenge an Wirkstoff pro Flächeneinheit angegeben. Bezogen auf ein Herbizid als Wirkstoff heißt das, es wird angegeben, welche Menge des Wirkstoffs (z.B. in Gramm oder Milligramm) pro Flächeneinheit (zum Beispiel pro m² oder pro ha) ausgebracht werden soll, um einen (optimalen) gewünschten Effekt zu erreichen. Mit Hilfe der oben aufgeführten Kalibrierungswerte, einer Sprühbreite und der geforderten Aufwandmenge kann der Verdünnungsgrad ermittelt werden. Die Sprühbreite kann vom Nutzer in das Computersystem eingegeben werden. Die Sprühbreite kann der Nutzer beispielsweise ermitteln, indem er die Breite des Streifens auf dem Boden misst, der von dem Sprühmittel oder der Testflüssigkeit während der Kalibrierung benetzt wird. Aus der mittleren Menge, die pro Zeiteinheit aus der mindestens einen Düse austritt, und der mittleren Geschwindigkeit, mit der sich der Nutzer bewegt, kann die mittlere Menge an Sprühmittel, die pro Flächeneinheit ausgebracht wird, ermittelt werden. Die geforderte Aufwandmenge und die Konzentration eines Wirkstoffs in einem Konzentrat können vom Nutzer in das Computersystem eingegeben werden oder anhand eines Produktnamens oder einer Produktkennung aus einer Datenbank ausgelesen werden. Aus den genannten Größen (geforderte Aufwandmenge Wirkstoff pro Flächeneinheit, mittlere Menge an ausgebrachtem Sprühmittel pro Flächeneinheit, Konzentration an Wirkstoff im vorliegenden Konzentrat) lassen sich die Mengen an Konzentrat und Verdünnungsmittel ermitteln, die miteinander vermischt werden müssen, um ein Sprühmittel zu erzeugen, das bei einer Applikation mit dem tragbaren Sprühgerät zu der geforderten Aufwandmenge führt.

Die Erfindung wird nachstehend anhand von Figuren näher erläutert, ohne die Erfindung auf die in den Figuren gezeigten Merkmale und Merkmalskombinationen beschränken zu wollen.

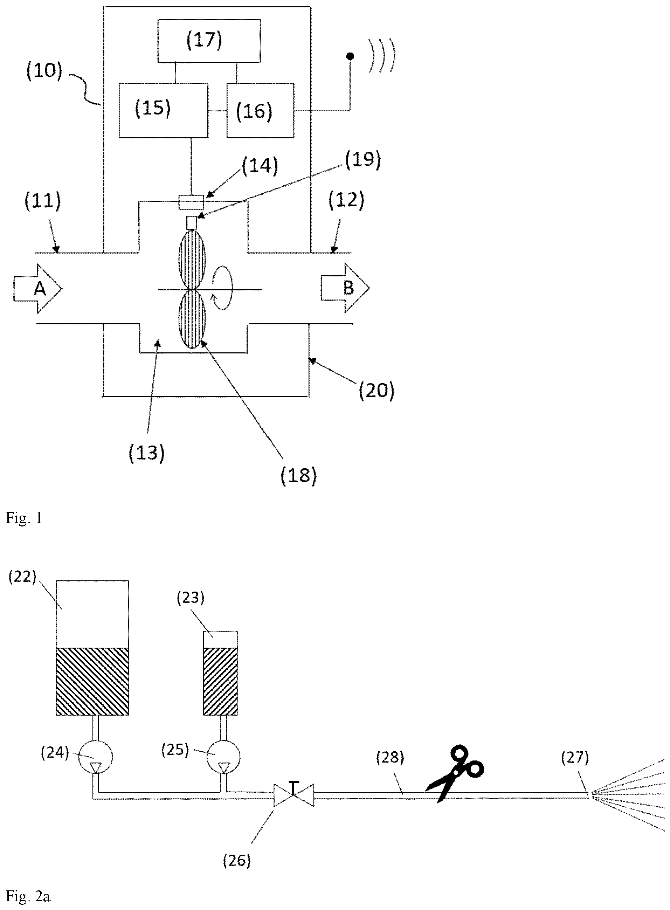

Fig. 1 zeigt schematisch eine Ausführungsform des erfindungsgemäßen Überwachungsmoduls. Das Überwachungsmodul (10) umfasst ein erstes Verbindungselement (11) und ein zweites Verbindungselement (12) zum Integrieren des Überwachungsmoduls in eine Leitung des Sprühgeräts zwischen einem Behälter für Sprühmittel und mindestens einer Düse. Das Überwachungsmodul (10) umfasst ferner eine Durchflusskammer (13) zwischen dem ersten Verbindungselement und dem zweiten Verbindungselement. Die Pfeile A und B zeigen die Fließrichtung eines Sprühmittels an, das von dem Behälter des Sprühgeräts durch die Durchflusskammer (13) in Richtung der mindestens einen Düse fließt. Pfeil A kennzeichnet die Fließrichtung des Sprühmittels, das aus Richtung des Behälters kommend in die Durchflusskammer (13) eintritt; Pfeil B kennzeichnet die Fließrichtung des Sprühmittels, das in Richtung der mindestens einen Düse die Durchflusskammer (13) wieder verlässt. In der Düse befindet sich ein Flügelrad (18), das durch das Sprühmittel, das durch die Durchflusskammer (13) fließt, in eine Drehbewegung versetzt wird. An dem Flügelrad (18) ist ein Permanentmagnet (19) angebracht. Der Permanentmagnet (19) bewegt sich bei einer Drehbewegung des Flügelrads (18) an einem Hall-Sensor (14) vorbei. Der Hall-Sensor (14) wird als Impulszähler verwendet. Die Impulse werden an eine Steuereinheit (15) weitergeleitet. Das Flügelrad (18), der Permanentmagnet (19) und der Hall-Sensor (14) bilden zusammen einen Durchflusssensor. Die Steuereinheit (15) ermittelt aus den Impulsen pro Zeiteinheit die Drehzahl des Flügelrads und aus der Drehzahl des Flügelrads die Strömungsgeschwindigkeit des Sprühmittels. Die Strömungsgeschwindigkeit des Sprühmittels kann über eine Sendeeinheit (16) an ein (separates) Computersystem übermittelt werden. Eine Energieversorgungseinheit (17) dient zur Versorgung des Durchflussmessers (14, 18, 19), der Steuereinheit (15) und der Sendeeinheit (16) mit elektrischer Energie. Alle Komponenten des Überwachungsmoduls (10) sind an einem Gehäuse (20) angebracht oder in dem Gehäuse (20) untergebracht.

Figuren 2a bis 2c zeigt schematisch, wie ein erfindungsgemäßes Überwachungsmodul in eine Leitung eines Sprühgeräts integriert werden kann. Fig. 2a zeigt das Sprühgerät. Das Sprühgerät umfasst einen ersten Behälter (22) mit einer ersten Flüssigkeit und einen zweiten Behälter (23) mit einer zweiten Flüssigkeit. Bei der zweiten Flüssigkeit kann es sich beispielsweise um ein Wirkstoffkonzentrat handeln, wobei es sich bei dem Wirkstoff um ein Pestizid handeln kann. Bei der ersten Flüssigkeit kann es sich um ein Verdünnungsmittel für das Wirkstoffkonzentrat, zum Beispiel um Wasser handeln.

Die erste Flüssigkeit wird über ein erstes Fördermittel (24) wie beispielsweise einer elektrisch angetriebenen Pumpe aus dem ersten Behälter (22) in Richtung mindestens einer Düse (27) befördert. Die zweite Flüssigkeit wird über ein zweites Fördermittel (25) wie beispielsweise einer elektrisch angetriebenen Pumpe aus dem zweiten Behälter (23) in Richtung mindestens einer Düse (27) befördert. Die Flüssigkeiten vermischen sich auf ihrem Weg durch die Leitung (28). An der mindestens einen Düse (27) tritt eine Mischung von erster und zweiter Flüssigkeit aus. Mit einem Absperrventil (26) kann der Fluss gestoppt werden.

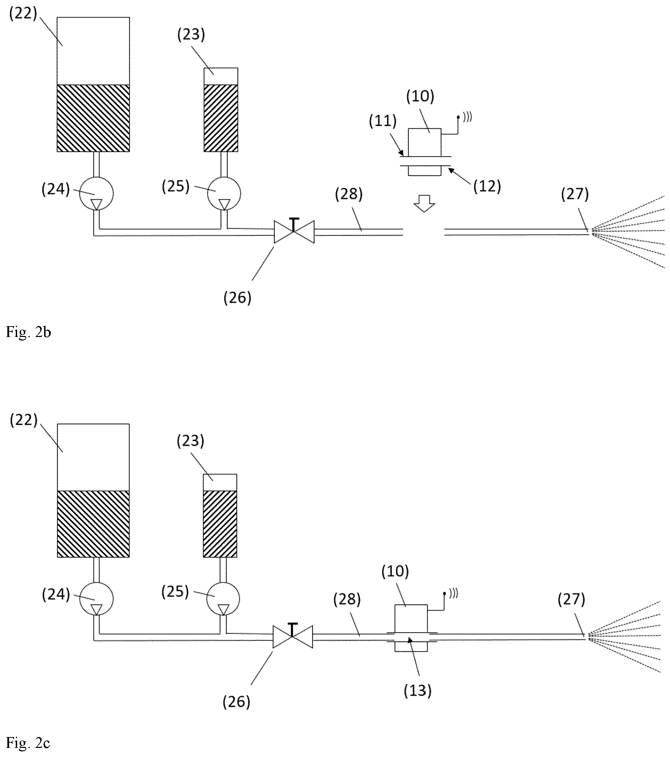

In Fig. 2a ist schematisch gezeigt, dass die Leitung (28) zwischen den Behältern (22, 23) und der mindestens einen Düse (27) an einer Stelle durchtrennt werden (durch die Schere angezeigt). In Fig. 2b ist dargestellt, dass die Leitung (28) zwischen den Behältern (22, 23) und der mindestens einen Düse (27) durchtrennt worden ist. Die Fluidverbindung zwischen den Behältern (22, 23) und der mindestens einen Düse (27) ist unterbrochen. An der Stelle der Unterbrechung wird das erfindungsgemäße Überwachungsmodul (10) integriert. Dazu weist das Überwachungsmodul (10) ein erstes Verbindungselement (11) und ein zweites Verbindungelement (12) auf. Der erste Verbindungselement (11) wird mit dem Teil der Leitung (28) verbunden, der stromaufwärts in Richtung der Behälter (22, 23) führt. Das zweite Verbindungselement (12) wird mit dem Teil der Leitung (28) verbunden, der stromabwärts in Richtung der mindestens einen Düse (27) führt. Fig. 2c zeigt das in die Leitung (28) integrierte Überwachungsmodul (10). Durch das Überwachungsmodul (10) ist die Fluidverbindung zwischen den Behältern (22, 23) und der mindestens einen Düse (27) wiederhergestellt. Flüssigkeit, die aus den Behältern (22, 23) in Richtung der mindestens einen Düse (27) fließt, fließt durch eine Durchflusskammer (13) des Überwachungsmoduls.

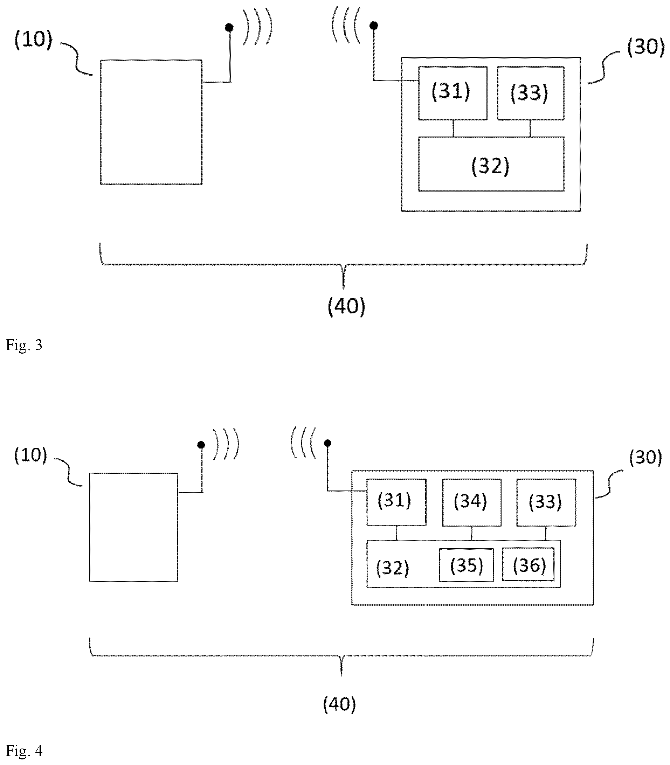

Fig. 3 zeigt schematisch eine Ausführungsform eines erfindungsgemäßen Systems. Das System (40) umfasst ein Überwachungsmodul (10) und ein Computersystem (30). Bei dem Überwachungsmodul (10) kann es sich beispielsweise um das in Fig. 1 gezeigte Überwachungsmodul handeln. Das Überwachungsmodul ist konfiguriert, Daten zur Menge eines Sprühmittels, die pro Zeiteinheit durch eine Durchflusskammer des Überwachungsmoduls fließt, an das Computersystem (30) zu übermitteln. Das Computersystem (30) umfasst eine Empfangseinheit (31), eine Steuereinheit (32) und eine Ausgabeeinheit (33). Die Steuereinheit (32) ist konfiguriert, die Empfangseinheit (31) zu veranlassen, die Daten, die von dem Überwachungsmodul (10) übermittelt werden, zu empfangen. Die Steuereinheit (32) ist ferner konfiguriert, die Ausgabeeinheit (33) zu veranlassen, die Daten einem Nutzer gegenüber anzuzeigen.

Fig. 4 zeigt schematisch eine weitere Ausführungsform des erfindungsgemäßen Systems. Das System (40) umfasst ein Überwachungsmodul (10) und ein Computersystem (30). Das Überwachungsmodul (10) ist konfiguriert, Mengen an Sprühmittel, die pro Zeiteinheit durch eine Durchflusskammer (nicht explizit dargestellt) des Überwachungsmoduls (10) fließen, zu messen und Daten zu diesen Mengen über eine Sendeeinheit (nicht explizit dargestellt) des Überwachungsmoduls an das Computersystem (30) zu übermitteln. Das Computersystem (30) umfasst eine Empfangseinheit (31) eine Steuereinheit (32), eine Mengenermittlungseinheit (36), eine Routenverfolgungseinheit (35) mit einem GPS-Sensor (34) und eine Ausgabeeinheit (33). Die Mengenermittlungseinheit (36) und die Routenverfolgungseinheit (35) können Bestandteile der Steuereinheit (32) sein. Die Steuereinheit (30) ist konfiguriert, die Empfangseinheit (31) zu veranlassen, die Daten zu den Mengen an Sprühmittel, die pro Zeiteinheit durch die Durchflusskammer fließen, von dem Überwachungsmodul (10) zu empfangen. Die Steuereinheit (32) ist ferner konfiguriert, die Routenverfolgungseinheit (35) zu veranlassen, die Route zu verfolgen, entlang der das Computersystem (30) (bzw. der GPS-Sensor (34) als Bestandteil des Computersystems (40)) bewegt wird. Die Steuereinheit (32) ist ferner konfiguriert, die Mengenermittlungseinheit (36) zu veranlassen, anhand der vom Überwachungsmodul (10) übermittelten Daten, Mengen an Sprühmittel zu ermitteln, die pro Zeiteinheit mit dem Sprühgerät entlang der Route appliziert werden. Die Steuereinheit (32) ist ferner konfiguriert, die Ausgabeeinheit (33) zu veranlassen, Informationen zu der Route und zu den Mengen an Sprühmittel, die entlang der Route appliziert werden oder worden sind, gegenüber einem Nutzer anzuzeigen.

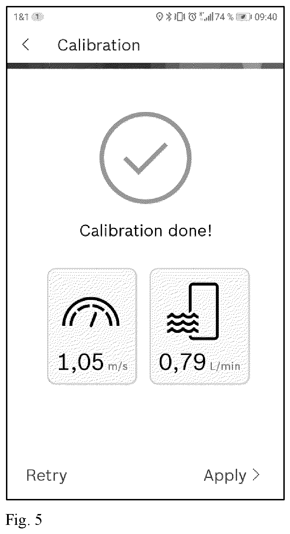

Figuren 5 bis 8 zeigen Bildschirmkopien (*screenshots*) eines mobilen Computersystems zur Unterstützung eines Sprühvorgangs und zur Kontrolle, Verfolgung und Dokumentation des Sprühvorgangs.

Fig. 5 zeigt den erfolgreichen Abschluss eines Kalibrierungsverfahrens, das durch ein Computerprogramm auf dem mobilen Computersystem unterstützt wird. Die ermittelten Werte können, wie abgebildet, dem Anwender dargestellt werden. Die Daten werden im System hinterlegt und dienen im weiteren Verlauf der Kontrolle der Einhaltung der Sprühparameter.

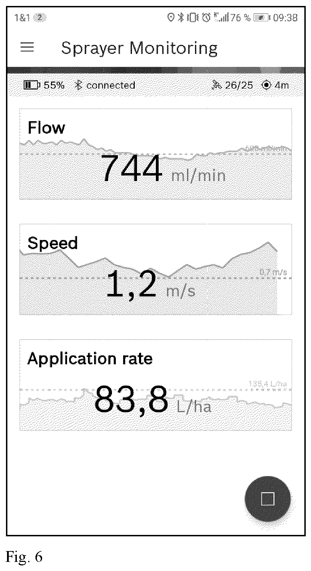

Fig. 6 zeigt Anzeigen des Computerprogramms während eines Sprühvorgangs. Oben ist die mittlere Menge an Sprühmittel, die pro Zeiteinheit durch die Durchflusskammer fließt, als Funktion der Zeit gezeigt. Die gestrichelte Linie gibt den während der Kalibrierung ermittelten Richtwert an, der vom Nutzer eingehalten werden sollte, um ein optimales Sprühergebnis zu erzielen. In der Mitte ist die Geschwindigkeit, mit der sich der Nutzer durch das Zielgebiet bewegt, als Funktion der Zeit gezeigt. Die gestrichelte Linie gibt die Richtgeschwindigkeit an, mit der sich der Nutzer bewegen sollte, um ein optimales Sprühergebnis zu erzielen. Unten ist die Aufwandmenge pro Flächeneinheit als Funktion der Zeit gezeigt. Die gestrichelte Linie gibt den Richtwert an, der erzielt werden sollte, um ein optimales Sprühergebnis zu erzielen.

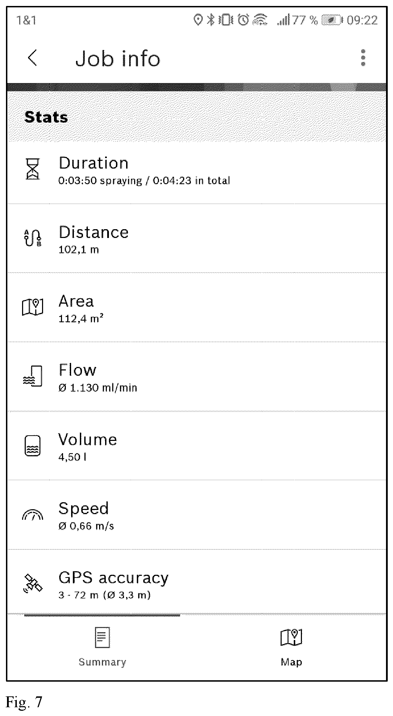

Fig. 7 zeigt eine Zusammenfassung von Größen nach einem Sprühvorgang an. Es ist angegeben, wie lange der Sprühvorgang gedauert hat (*Duration*), welche Wegstrecke der Nutzer dabei zurückgelegt hat (*Distance*), welche Fläche er dabei besprüht hat (*Area*), wie hoch die arithmetisch gemittelte Durchflussrate war (*Flow*), welches Volumen an Sprühmittel versprüht worden ist (*Volume*), wie hoch die arithmetisch gemittelte Geschwindigkeit des Nutzers war (*Speed*) und welche Genauigkeit die Positionsbestimmung aufweist (*GPS accuracy*). Darüber hinaus werden die Daten einer zuvor durchgeführten Kalibrierung sowie zu Beginn des Sprühvorgangs eingegebene Parameter (bspw. Flächenbezeichnung, Kultur) angezeigt.

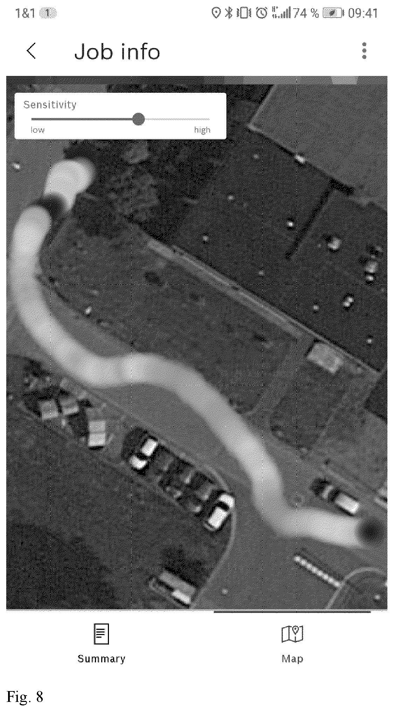

Fig. 8 zeigt auf einer Karte den Weg an, der von einem Nutzer zurückgelegt worden ist. Die Breite des Streifens kennzeichnet die Sprühbreite. Die Graustufen können je nach Einstellung verschiedene Parameter angeben: die Geschwindigkeit des Nutzers, die Aufwandmenge, die Durchflussrate u.a.

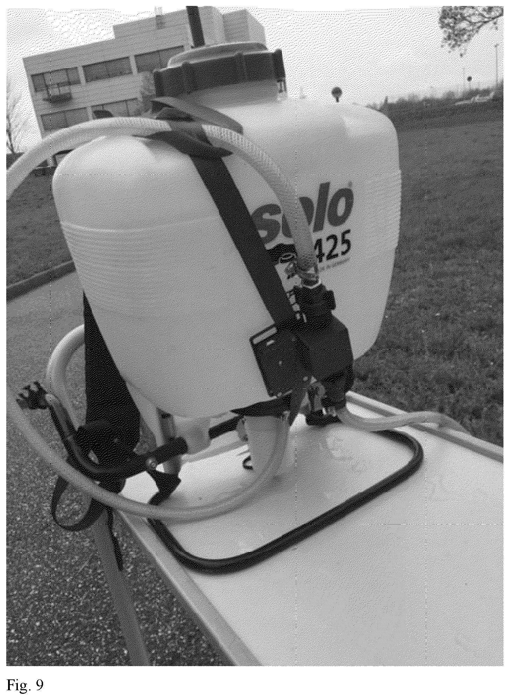

Fig. 9 zeigt eine fotografische Aufnahme einer Überwachungsmodul, die in eine Leitung eines tragbaren Sprühgeräts eingebracht ist.

## Patentansprüche

1. Überwachungsmodul umfassend:
- ein Gehäuse,
- ein erstes Verbindungselement zur Integration des Gehäuses in eine Leitung eines vorzugsweise tragbaren Sprühgeräts, wobei das erste Verbindungselement an dem Gehäuse angebracht ist,
- ein zweites Verbindungselement zur Integration des Gehäuses in die Leitung des vorzugsweise tragbaren Sprühgeräts, wobei das zweite Verbindungselement an dem Gehäuse angebracht ist,
- eine Durchflusskammer in dem Gehäuse zwischen dem ersten Verbindungselement und dem zweiten Verbindungselement,
- einen Durchflussmesser in der Durchflusskammer zum Messen einer Menge an Sprühmittel, die pro Zeiteinheit durch die Durchflusskammer fließt,
- eine Sendeeinheit in dem Gehäuse außerhalb der Durchflusskammer,
- eine Steuereinheit in dem Gehäuse außerhalb der Durchflusskammer, wobei die Steuereinheit konfiguriert ist, Messwerte vom Durchflussmesser zu empfangen und die Sendeeinheit zu veranlassen, Daten zur Menge des Sprühmittels, die durch die Durchflusskammer fließt, an ein Computersystem zu übermitteln, und
- eine Energieversorgungseinheit in dem Gehäuse außerhalb der Durchflusskammer zur Versorgung des Durchflussmessers, der Steuereinheit und der Sendeeinheit mit elektrischer Energie,
**dadurch gekennzeichnet, dass**
die Daten zur Menge des Sprühmittels, Daten zur Menge des Sprühmittels, die pro Zeiteinheit durch die Durchflusskammer fließt, sind.

2. Überwachungsmodul gemäß Anspruch 1, ferner umfassend:
- Mittel zum Befestigen des Gehäuses an dem Sprühgerät.

3. Überwachungsmodul gemäß einem der Ansprüche 1 oder 2, wobei das Überwachungsmodul der Verfolgung und/oder Überwachung und/oder Dokumentation eines Sprühvorgangs mittels des Sprühgeräts dient, wobei der Sprühvorgang von einem menschlichen Nutzer vorgenommen wird.

4. Überwachungsmodul gemäß einem der Ansprüche 1 bis 3, wobei das Überwachungsmodul ein von dem Sprühgerät unabhängiges, separates Gerät ist.

5. Überwachungsmodul gemäß einem der Ansprüche 1 bis 4, wobei das Überwachungsmodul ein Nachrüstsatz für bestehende, vorzugsweise tragbare Sprühgeräte ist, mit dem die bestehenden Sprühgeräte mit erweiterten Funktionalitäten ausgestattet werden können, um Sprühvorgänge zu kontrollieren, zu verfolgen und/oder zu dokumentieren.

6. Überwachungsmodul gemäß einem der Ansprüche 1 bis 5, wobei das erste Verbindungselement und das zweite Verbindungselement als Schlauchtüllen ausgeführt sind.

7. Überwachungsmodul gemäß einem der Ansprüche 1 bis 6, wobei der Durchflussmesser ein Flügelradsensor, ein magnetisch-induktiver Durchflussmesser, ein Schwebekörper-Durchflussmesser, in Ultraschall-Durchflussmesser, ein Coriolis-Massendurchflussmesser, ein kalorimetrischer Durchflussmesser oder ein Vortex-Durchflussmesser ist.

8. Überwachungsmodul gemäß einem der Ansprüche 1 bis 7, ferner umfassend ein Empfangsmodul zum Empfang von Daten vom Computersystem zum Überwachungsmodul.

9. Überwachungsmodul gemäß einem der Ansprüche 1 bis 8, ferner umfassend einen Datenspeicher zum Speichern von Messwerten und/oder daraus abgeleiteten Daten.

10. System umfassend das Überwachungsmodul gemäß einem der Ansprüche 1 bis 9 und ein Computersystem.

11. System gemäß Anspruch 10, wobei das Computersystem ein mobiles Computersystem ist.

12. System gemäß einem der Ansprüche 10 oder 11, wobei das System eine Routenverfolgungseinheit umfasst.

13. System gemäß einem der Ansprüche 10 bis 12, wobei das System eine Mengenermittlungseinheit umfasst.

14. System gemäß Anspruch 13, wobei die Mengenermittlungseinheit dafür konfiguriert ist, die Messwerte des Durchflussmessers zu empfangen und daraus die Mengen an appliziertem Sprühmittel zu berechnen.

15. System gemäß einem der Ansprüche 13 oder 14, wobei die Mengenermittlungseinheit konfiguriert ist, Aufwandmengen eines in dem Sprühmittel enthaltenen Wirkstoffs pro Flächeneinheit zu berechnen.

## Claims

1. A monitoring module comprising:
- a housing,
- a first connection element for integrating the housing into a conduit of a preferably portable spraying device, wherein the first connection element is mounted on the housing,
- a second connection element for integrating the housing into the conduit of the preferably portable spraying device, wherein the second connection element is mounted on the housing,
- a flow chamber in the housing between the first connection element and the second connection element,
- a flow meter in the flow chamber for measuring an amount of spray agent flowing through the flow chamber per unit of time,
- a transmission unit in the housing outside the flow chamber,
- a control unit in the housing outside the flow chamber, wherein the control unit is configured to receive measurement values from the flow meter and to cause the transmission unit to transmit data relating to the amount of spray agent flowing through the flow chamber to a computer system, and
- a power supply unit in the housing outside the flow chamber for supplying electrical energy to the flow meter, the control unit, and the transmission unit,
**characterized in that**
the data relating to the amount of spray agent are data representing the amount of spray agent flowing through the flow chamber per unit of time.

2. The monitoring module according to claim 1, further comprising:
- means for fastening the housing to the spraying device.

3. The monitoring module according to any one of claims 1 or 2, wherein the monitoring module is used for tracking and/or monitoring and/or documenting a spraying process using the spraying device, wherein the spraying process is carried out by a human user.

4. The monitoring module according to any one of claims 1 to 3, wherein the monitoring module is a device that is independent of and separate from the spraying device.

5. The monitoring module according to any one of claims 1 to 4, wherein the monitoring module is a retrofit kit for existing, preferably portable, spraying devices, by means of which the existing spraying devices can be provided with extended functionalities in order to monitor, track, and/or document spraying processes.

6. The monitoring module according to any one of claims 1 to 5, wherein the first connecting element and the second connecting element are configured as hose nozzles.

7. The monitoring module according to any one of claims 1 to 6, wherein the flow meter is a impeller sensor, a magnetic-inductive flow meter, a float-type flow meter, an ultrasonic flow meter, a Coriolis mass flow meter, a calorimetric flow meter, or a vortex flow meter.

8. The monitoring module according to any one of claims 1 to 7, further comprising a receiving module for receiving data from the computer system to the monitoring module.

9. The monitoring module according to any one of claims 1 to 8, further comprising a data storage for storing measurement values and/or data derived therefrom.

10. A system comprising the monitoring module according to any one of claims 1 to 9 and a computer system.

11. The system according to claim 10, wherein the computer system is a mobile computer system.

12. The system according to any one of claims 10 or 11, wherein the system comprises a route tracking unit.

13. The system according to any one of claims 10 to 12, wherein the system comprises a quantity determination unit.

14. The system according to claim 13, wherein the quantity determination unit is configured to receive the measurement values from the flow meter and to calculate therefrom the quantities of spray agent applied.

15. The system according to any one of claims 13 or 14, wherein the quantity determination unit is configured to calculate application rates of an active substance contained in the spray agent per unit area.

## Revendications

1. Module de surveillance, comprenant :
- un boîtier,
- un premier élément de connexion pour l'intégration du boîtier dans une conduite d'un pulvérisateur, de préférence portable, ledit premier élément de connexion étant fixé au boîtier,
- un deuxième élément de connexion pour l'intégration du boîtier dans la conduite du pulvérisateur, de préférence portable, ledit deuxième élément de connexion étant fixé au boîtier,
- une chambre d'écoulement dans le boîtier, entre le premier élément de connexion et le deuxième élément de connexion,
- un débitmètre dans la chambre d'écoulement pour la mesure d'une quantité d'agent de pulvérisation s'écoulant à travers la chambre d'écoulement par unité de temps,
- une unité d'émission dans le boîtier, à l'extérieur de la chambre d'écoulement,
- une unité de commande dans le boîtier, à l'extérieur de la chambre d'écoulement, ladite unité de commande étant configurée pour recevoir des valeurs de mesure du débitmètre et commander l'unité d'émission afin qu'elle transmette à un système informatique des données relatives à la quantité d'agent de pulvérisation s'écoulant à travers la chambre d'écoulement, et
- une unité d'alimentation en énergie dans le boîtier, à l'extérieur de la chambre d'écoulement, destinée à alimenter en énergie électrique le débitmètre, l'unité de commande et l'unité d'émission,
**caractérisé en ce que**
les données relatives à la quantité d'agent de pulvérisation sont des données relatives à la quantité d'agent de pulvérisation s'écoulant à travers la chambre d'écoulement par unité de temps.

2. Module de surveillance selon la revendication 1, comprenant en outre :
- des moyens pour fixer le boîtier au pulvérisateur.

3. Module de surveillance selon la revendication 1 ou la revendication 2, où le module de surveillance sert au suivi et/ou à la surveillance et/ou à la documentation d'une opération de pulvérisation au moyen du pulvérisateur, ladite opération de pulvérisation étant exécutée par un utilisateur humain.

4. Module de surveillance selon l'une des revendications 1 à 3, où le module de surveillance est un appareil séparé, indépendant du pulvérisateur.

5. Module de surveillance selon l'une des revendications 1 à 4, où le module de surveillance est un kit d'adaptation pour des pulvérisateurs existants, de préférence portables, au moyen duquel les pulvérisateurs existants peuvent être dotés de fonctionnalités étendues afin de contrôler, suivre et/ou documenter des opérations de pulvérisation.

6. Module de surveillance selon l'une des revendications 1 à 5, où le premier élément de connexion et le deuxième élément de connexion sont réalisés sous forme de raccords cannelés.

7. Module de surveillance selon l'une des revendications 1 à 6, où le débitmètre est un capteur à ailettes, un débitmètre magnéto-inductif, un débitmètre à flotteur, un débitmètre à ultrasons, un débitmètre massique de Coriolis, un débitmètre calorimétrique ou un débitmètre à vortex.

8. Module de surveillance selon l'une des revendications 1 à 7, comprenant en outre un module de réception pour la réception de données du système informatique vers le module de surveillance.

9. Module de surveillance selon l'une des revendications 1 à 8, comprenant en outre une mémoire de données pour le stockage de valeurs de mesure et/ou de données dérivées de celles-ci.

10. Système, comprenant le module de surveillance selon l'une des revendications 1 à 9 et un système informatique.

11. Système selon la revendication 10, ledit système informatique étant un système informatique mobile.

12. Système selon la revendication 10 ou la revendication 11, ledit système comprenant une unité de suivi de trajet.

13. Système selon l'une des revendications 10 à 12, ledit système comprenant une unité de détermination de débit.

14. Système selon la revendication 13, où l'unité de détermination de débit est configurée pour recevoir les valeurs de mesure du débitmètre et pour calculer à partir de celles-ci les quantités d'agent de pulvérisation appliquées.

15. Système selon la revendication 13 ou la revendication 14, où l'unité de détermination de débit est configurée pour calculer des quantités d'application d'une substance active contenue dans l'agent de pulvérisation par unité de surface.
